# EUROPEAN PATENT SPECIFICATION

(11) **EP 2 945 283 B1**
(45) Date of publication and mention of the grant of the patent: **08.08.2018**
(21) Application number: 15167373.8
(22) Date of filing: 12.05.2015
(51) Int. Cl.: H02S 20/30, H02S 20/23, H02S 20/25, F24S 25/00

(54) **SET OF ROOF PANELS WITH ADJUSTING MEANS, ROOF PROVIDED WITH SUCH ROOF PANELS AND METHOD FOR COVERING A ROOF**
DACHPLATTENSET MIT JUSTIERVORRICHTUNG, DACH MIT SELBIGEM DACHPLATTENSET UND DACHEINDECKUNGSVERFAHREN
ENSEMBLE DE PANNEAUX DE TOIT AVEC DISPOSITIF D'AJUSTEMENT, TOIT ÉQUIPÉ AVEC DES PANNEAUX DE TOIT ET PROCÉDÉ DE COUVERTURE DE TOIT

(30) Priority: 12.05.2014 NL 2012800
(43) Date of publication of application: 18.11.2015
(73) Proprietor: Stafier Holland B.V., 6902 PC Zevenaar (NL)
(72) Inventor: Harthoorn, Adrianus Johannes, 6902 PC Zevennar (NL)
(74) Representative: Algemeen Octrooi- en Merkenbureau B.V.

(56) References cited:
- EP-A2- 2 148 154
- WO-A1-2010/047577
- WO-A2-03/007688
- DE-U1-202008 015 141
- GB-A- 2 454 368
- JP-A- 2003 347 576
- US-A1- 2004 187 909
- US-A1- 2013 111 831
- US-A1- 2013 291 479
- US-B1- 7 592 537

## Description

According to a first aspect, the present invention relates to a roof panel having an at least substantially rectangular peripheral form with a longitudinal direction and a transverse direction, the roof panel comprising a solar panel, an at least substantially watertight plate element extending under and at a distance from the solar panel and attaching means with which the solar panel and the plate element are mutually attached or at least attachable, wherein the plate element is provided on one longitudinal side with a first longitudinal profile and provided on the other longitudinal side with a second longitudinal profile, wherein the first and the second longitudinal profile bound a plate portion of the plate element and wherein the first longitudinal profile of the roof panel and a second longitudinal profile of a like plate element of an adjacent roof panel overlap each other at least in the situation mounted on a roof. Unless expressly stated otherwise, the longitudinal direction is defined in this document as the direction of an angle of inclination in which a roof on which a panel is mounted extends. The phrase "or at least attachable" is understood here to mean that the components can be stored separately. A roof panel according to the present invention is always mounted as assembled panel on a roof and thereby differs from systems wherein the plate elements are arranged on a roof before the associated solar panels are attached to the plate elements. An at least substantially watertight plate element is understood in this document to mean that the plate portion, at least in the situation mounted on a roof, does not allow passage of water therethrough. Water can however optionally run off the plate over a peripheral edge of the plate element. In the case of the roof panels according to the present invention a watertight overlap can be realized at the overlap of two adjacent plate elements without the necessity of additional measures.

Such a roof panel is known for covering a roof with photovoltaic (PV) panels, preferably with PV panels typically having a matrix of six solar cells in width direction and a number of solar cells in the longitudinal direction adjacently of each other. The panels are then mounted adjacency of each other with mutually overlapping side edges on tiling battens of a roof or a frame arranged specially for the panels in order to obtain a strong construction. Sometimes intentionally only a part of the roof is covered with such panels. Sometimes the greatest possible part of the roof is covered with such panels and a possibly remaining part is finished with roof tiles. The mutual distance between the plate element and the solar panel serves for ventilation so that the solar panel can be cooled for the purpose of a better efficiency. WO2010/047577 A1 discloses a roof panel with an integrated solar panel and roof comprising such panels.

A drawback of the known roof panels is in situations where a relatively time-consuming and/or expensive finishing, for instance with roof tiles, may be required when the width of a roof for covering does not correspond to a specific number of times the width of a roof panel. The present invention now has for its object to provide a roof panel according to the introduction with which a relatively time-consuming and/or costly finishing can be avoided. This object is achieved with the present invention in that the plate element is configured for the purpose of adjusting the degree of overlap of the two longitudinal profiles. That is, the first and second longitudinal profiles of the plate element are designed such that the degree of overlap, at least in the width direction of the plate elements, between a first longitudinal profile of a plate element of a roof panel and a second longitudinal profile of a like plate element of an adjacent roof panel can be selected and adjusted up to a determined limit value as required. Depending on the width of a roof a larger or smaller overlap can thus be selected in order to cover a determined width of a roof. There are many options for enabling the degree of overlap between a first and a second longitudinal profile. Several options are discussed below, although the scope of protection of the present invention is not limited to these specific embodiments. It is usual for a plate element of a roof panel to comprise an upright wall on the longitudinal edges and on the upper edge, which upright walls can support regulation of rainwater drainage and/or the relative orientation of roof panels during installation. The upright edge can be provided with ventilating holes, also referred to as louvres, for the purpose of ventilating the space between a plate element and a solar panel. A plate element can also be provided with fixing holes, for instance in the plate portion. These fixing holes or optional other provisions, can be sealed watertightly in the mounted state of the roof panel. A plate element which is not wholly but substantially watertight is in this way applied for a watertight construction. A longitudinal profile is defined in this document as a part of the plate element extending laterally outward from such an upright wall, including the associated upright wall. The plate portion of the plate element extends between the two longitudinal profiles. The plate portion can be a flat plate as well as a profiled plate, wherein the profile of the plate portion can contribute toward the structural stiffness of the plate element. The longitudinal profiles, or at least the parts thereof intended to overlap a corresponding longitudinal profile of an adjacent plate element, are normally situated in a plane above the plane of the plate portion. It is however possible for the plate portion on the one hand and the longitudinal profiles on the other to be located in the same plane. In that case the profile does not have the upright wall and the location where a plate portion transposes into a longitudinal profile is arbitrary, although this in no way detracts from the basic underlying concept of the present invention. In the known roof panels some freedom of movement of the panels relative to each other is indeed provided in the width direction in order to enable expansion and contraction of the plate elements subject to for instance the ambient temperature. In known systems this clearance can amount to 5 mm. The adjustable overlap according to the present invention has the purpose however of enabling a greater variation in overlap, i.e. at least 1 cm.

It is indeed known to orient solar panels relative to each other in the width direction during installation such that an equal distribution of the roof panels over a roof is achieved. Auxiliary means, such as for instance strips, are however always necessary here to make a watertight seal with the roof panels. Such roof panels can alternatively be arranged above a per se watertight construction, such as for instance a tiled roof fully laid with tiles so that the construction of roof panels need not itself be watertight. It is also known to orient roof panels lying one above another overlapping variably relative to each other without further measures such that a watertight construction is realized. Use is however made here of the fact that water on a sloping roof will not flow upward, or will do so at most to very slight extent as a result of capillary action. There does not therefore need to be a good seal in the case of roof panels lying one above another because water cannot reach a (higher) opening between two roof panels.

In an embodiment according to the present invention the first and the second longitudinal profile, optionally mirrored along the longitudinal axis of the roof panel, are identical. When the first and second longitudinal profile mirrored along a longitudinal axis of the roof panel are identical, the roof panel can optionally be arranged on a roof in two orientations rotated 180° relative to each other round the center, at least if other elements of the roof panel also make this possible.

It is recommended here that the first and the second longitudinal profile are each formed as a flat strip extending parallel to the plate portion of the plate element, wherein each longitudinal profile optionally comprises an upright wall adjacent to the plate portion. The upright walls help to prevent rainwater running downward from a roof via a plate element being able to flow from the plate element of the associated roof panel to a plate element of an adjacent roof panel, whereby leakage could possibly occur at connecting points that are present, at least if no further measures are provided against leakage. An upright wall can likewise serve as limitation to the degree to which two adjacent plate elements can overlap each other. Such an upright wall can thus assist in mounting of such roof panels on a roof. It is alternatively possible to dispense with such an upright wall so that adjacent plate elements can slide in unlimited manner over each other, at least to the extent other elements of the associated roof panels make this possible. In both alternative embodiments of roof panels with strips as longitudinal profiles extending parallel to the plate portion of the plate element the strips can simply be laid on each other and, at least to the extent allowed by the width of the plate elements on the one hand and the mutual spacing between the associated solar panels on the other, can be shifted in continuously variable manner relative to each other in the width direction. In such an embodiment two adjacent roof panels do not strictly speaking extend in one plane because the roof panel having the longitudinal profile which lies on a longitudinal profile of an adjacent roof panel extends a distance above the adjacent roof panel corresponding to the thickness of a plate element. Such a difference is however not discernible with the naked eye, or hardly so. When fixing holes are provided in a plate portion of a plate element for the purpose of screwing the roof panel to tiling battens, a free space possibly caused by the difference in height between the higher plate element and a tiling batten will be compensated in that the relevant tiling batten and the plate element are tightened towards each other.

In an alternative embodiment according to the present invention the first and the second longitudinal profile each have their own mutually differing form. In such an embodiment it is possible during assembly to slidably retain one of the longitudinal profiles inside the corresponding longitudinal profile of an adjacent roof panel. A stronger construction can thus be provided and the degree of overlap of the two longitudinal profiles can be limited by the retention of the one profile inside the other profile. The degree of overlap of the two longitudinal profiles is thus prevented from becoming (too) small, whereby the risk of leakage could increase as a result of this (too) small overlap.

It is recommended here that the first longitudinal profile has a cross-sectional form of a reverse U, wherein the second longitudinal profile comprises an upright wall bounding the plate portion. A combination of a U-profile and an upright wall can of course also be envisaged. It is recommended here that the leg of the U lying furthest outward takes a shorter form than the leg of the U adjacent to the plate portion. The upright wall of the second longitudinal profile preferably has a length which is likewise smaller than the length of the part of the U of the first longitudinal profile adjacent to the plate portion. The sum of the lengths of the leg of the U of the first longitudinal profile remote from the plate portion and the length of the upright wall of the second longitudinal profile is preferably greater than the length of the leg of the U of the first longitudinal profile adjacent to the plate portion. The upright wall of the second longitudinal profile thus at least partially overlaps the leg of the first longitudinal profile of an adjacent roof panel remote from the plate portion, whereby a relative sliding of the two plate elements relative to each other in the width is limited by the upright wall of the second longitudinal profile on the one hand and the leg of the first longitudinal profile remote from the plate portion on the other. Sliding of the two roof elements toward each other in the width is likewise limited, i.e. by the upright wall of the second longitudinal profile on the one hand and the leg of the U of the first longitudinal profile adjacent to the plate portion on the other. The upright wall of the second longitudinal profile can comprise on the end remote from the plate portion a profile part lying at right angles to the upright wall. The part of the second longitudinal profile lying at right angles to the upright wall in that case provides a support for the base of the reverse U of the first longitudinal profile, wherein both longitudinal profiles are sealed even better against each other, at least when the base of the reverse U and the part of the second longitudinal profile lying at right angles to the upright wall lie here against each other. A sealing element can optionally be provided between the first and the second longitudinal profile for the watertight construction provided by plate elements.

In an exemplary embodiment underlying the present invention the base of the reverse U of the first longitudinal profile extends over a distance of at least 1 cm, more preferably at least 2 cm and still more preferably at least 4 cm or at least 5 cm. It will be apparent that, the longer the base of the U, the greater the extent of adjustability of the overlap of the two longitudinal profiles.

It is recommended that the plate element is configured for continuously variable adjustment of the degree of overlap of the two longitudinal profiles. A possible adjustment of the degree of overlap does not therefore depend on a stepwise adjustment, and a possible space to be compensated can always be adjusted in equal parts between all roof panels. A stepped adjustment option is of course also possible. When the first and the second longitudinal profile can for instance be retained stepwise in each other, the retention can ensure in the case of expansion or contraction as a result of ambient temperature that the relative orientation between different mutually adjacent roof panels always returns to a starting shape or starting orientation. The present invention relates to a set of at least two roof panels which are mutually adjacent or which can at least be mounted mutually adjacently, each having an at least substantially rectangular peripheral form with a longitudinal direction and a transverse direction, each roof panel comprising a solar panel, a watertight plate element extending under and at a distance from the solar panel and attaching means with which the solar panel and the plate element are mutually attached or at least attachable, wherein a first plate element associated with at least a first roof panel is provided on a longitudinal side facing at least in mounted position toward a second roof panel with a first longitudinal profile and a second plate element associated with the second roof panel is provided on a longitudinal side facing at least in mounted position toward the first roof panel with a second longitudinal profile, and wherein an at least substantially watertight seal is realized between the plate elements when the first longitudinal profile and the second longitudinal profile are mounted overlapping each other, wherein the first and second plate elements are configured for the purpose of adjusting the degree of overlap of the two longitudinal profiles. The set of at least two mutually adjacent roof panels is preferably formed from a set of identical roof panels according to the first aspect of the present invention. Although it is alternatively possible to use differing types of roof panel to achieve the above stated object, for instance by alternately arranging adjacently of each other a roof panel with two first longitudinal profiles and a roof panel with two differently formed second longitudinal profiles, this is not recommended. Identical roof panels for providing a watertight roof construction have advantages in terms of logistics and costs.

According to a second aspect, the present invention relates to a roof provided with a set of roof panels according to the present invention. In addition to roof panels lying adjacently of each other, the set of roof panels can here also comprise roof panels lying one above another. In such an aspect of roof panels a watertight overlap will of course preferably be provided between roof panels lying one above another.

According to a third aspect, the present invention relates to a method for covering a roof at least partially with a set of roof panels according to the present invention, comprising the steps of:
- measuring the width to be covered with roof panels of the roof or roof part for covering;
- dividing the measured width by the plate width, i.e. the width of the plate portion of a roof panel;
- determining the integer value of the outcome of the division;
- determining the remainder value of the division;
- determining an adjustment value by dividing the remainder value by [the integer value minus 1];
- determining the overlap of the first and second longitudinal profile, being the maximum overlap minus the adjustment value; and
- arranging the roof panels on the roof or roof part for covering while taking account of the thus determined overlap. To the width of the plate portion can preferably be added a distance of a part of one of the two longitudinal profiles which, with maximum overlap between the first and the second longitudinal profile, is not overlapped by the other longitudinal profile. In a method according to the third aspect of the present invention it is thus possible to have the width of a roof (part) covered with roof panels correspond to the width of the roof (part) to be covered even if the roof (part) to be covered has a width other than the width of a number of roof panels with a fixed degree of overlap between two adjacent plate elements. This avoids an extra finishing in addition to the covering of the roof (part) with roof panels still being necessary to bridge an otherwise uncovered strip of the roof (part).

The present invention will be further elucidated hereinbelow with reference to an exemplary embodiment of a roof panel and a roof provided with roof panels according to the present invention as shown in the accompanying figures, in which:
- Figure 1: is a perspective top view of a roof panel, wherein parts of the solar panel are cut away;
- Figure 2A: shows the detail IIA of figure 1;
- Figure 2B: shows the detail IIB of figure 1;
- Figure 3: is a vertical longitudinal sectional view of the roof panel;
- Figure 4: is a vertical longitudinal sectional view of connecting roof panels;
- Figure 5: is a vertical cross-sectional view of a roof panel;
- Figure 6A: is a vertical cross-sectional view of adjacent panels;
- Figure 6B: shows the detail VIB of figure 6A;
- Figure 7A: is a vertical cross-sectional view of adjacent panels with adjustable overlap of the longitudinal profiles;
- Figure 7B: shows the detail VIIB of figure 7A;
- Figure 7C: shows the detail VIIC of figure 7A;
- Figure 8A: is a vertical cross-sectional view of two adjacent panels provided with a further exemplary embodiment of a longitudinal profile;
- Figure 8B: shows the detail VIIIB of figure 8A;
- Figure 9A: is a perspective view of a detail of two plate elements with omega profiles;
- Figure 9B: is a perspective view of a detail of two mutually connected plate elements;
- Figure 10: is a perspective view of a matrix of roof panels on a roof.

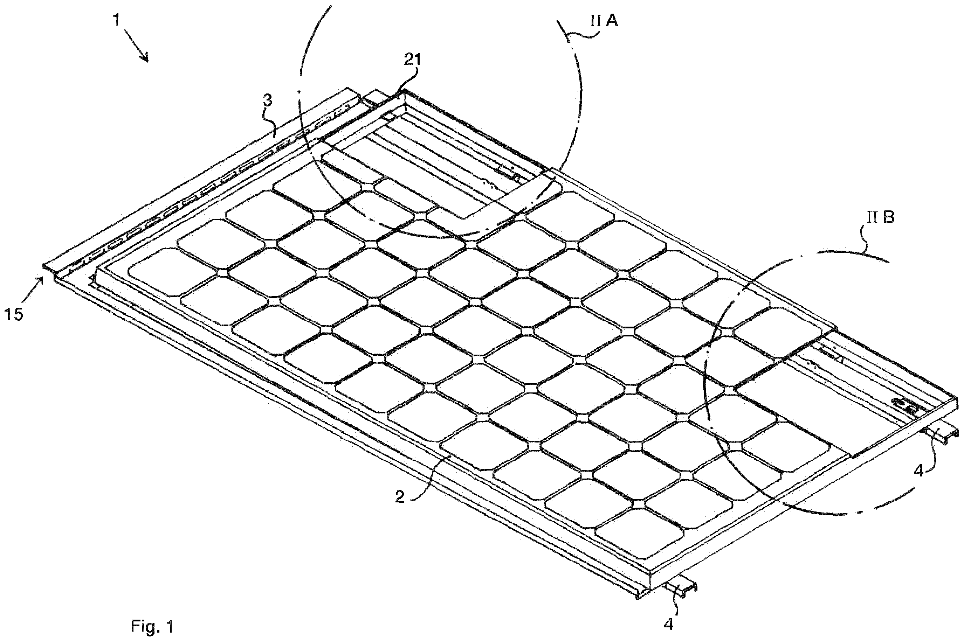

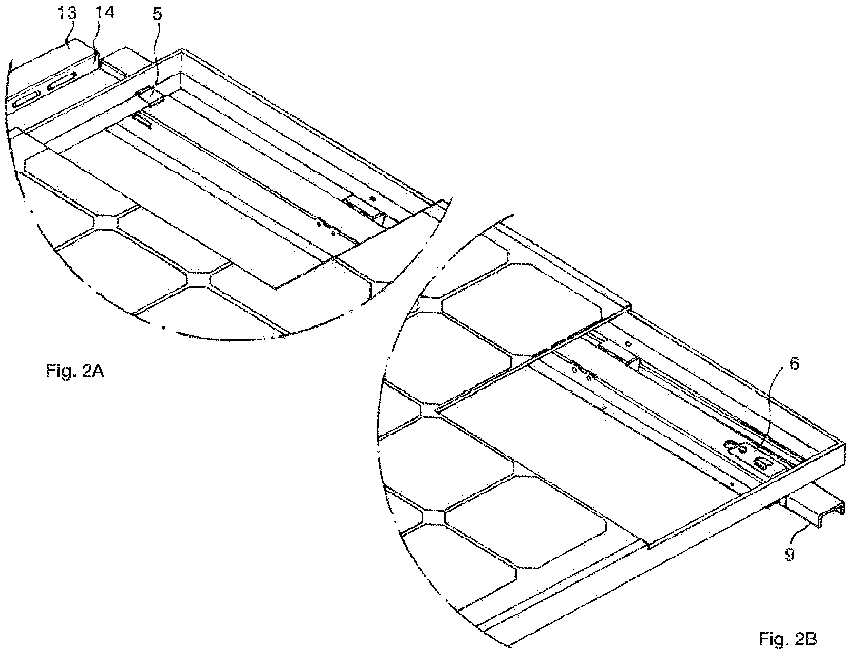

Shown in figure 1 is a roof panel 1 comprising a solar panel 2 and a plate element 3. The solar panel 2 and the plate element 3 are attached to each other by means of omega profiles 4. This attachment is shown in detail in figure 2A and figure 2B. Shown in figure 2A is that the solar panel 2 is connected by means of a fastening lip 5 to the omega profile 4. The fastening lip 5 is formed by a part pressed out of the omega profile 4. Shown in figure 2B is the attaching strip 6 with which the solar panel 2 is fixed with the frame 21 to the omega profile 4. The attaching strip 6 is connected slidably to the omega profile 4. Because the attaching strip 6 is connected slidably to the omega profile 4, it is possible after realizing a connection using the fastening lip 5 to easily fix the opposite side of the solar panel 2 to the omega profile 4. Such an attachment is realized before the roof panel 1 is attached to a roof in order to enable rapid covering of a roof. The difference in height between the upper part and the lower part of the omega profile does in fact correspond to the height of an upright edge 14 of the plate element 3.

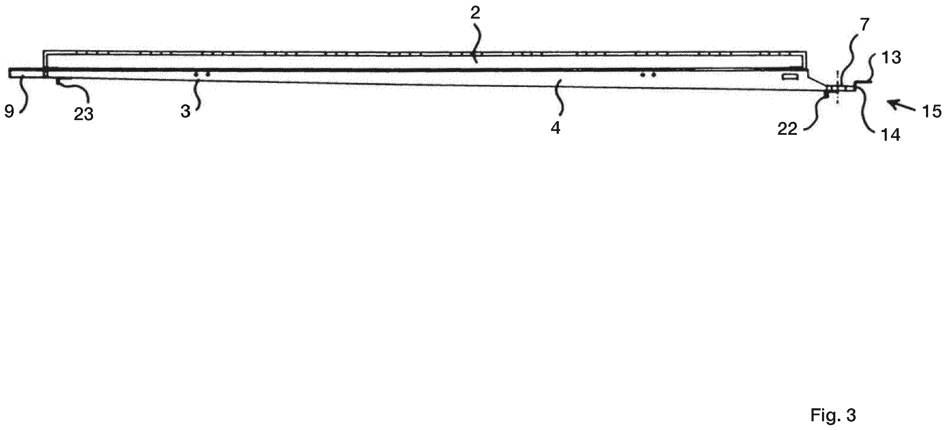

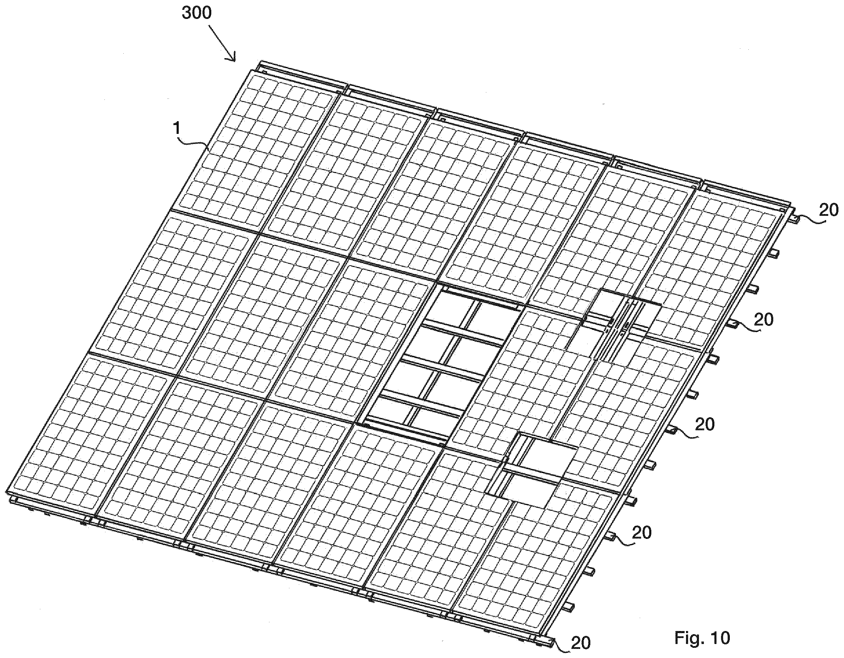

Figure 3 shows that the omega profile 4 attaches the plate element 3 and the solar panel 2 at an acute angle to each other. The plate element 3 is provided on the upper edge 13 with a spacer 15. This spacer 15 is formed by an upright edge 14 and the upper edge 13 which is provided on the roof panel 1 in order to provide ventilation to the space between the solar panel 2 and the plate element and between the roof panel and an underlying roof construction, as will be elucidated later in this document. The mounting opening 7 is provided for the purpose of fixing the plate element 3 to an underlying roof construction, for instance a tiling batten (not shown). A hook element 22 and a locking element 23 are formed on the underside of the omega profile 4. During mounting of the roof panel the hook element 22 is hooked onto the tiling batten 20 shown in figure 10. The locking element 23 realizes a locking of two omega profiles 4 attached to each other.

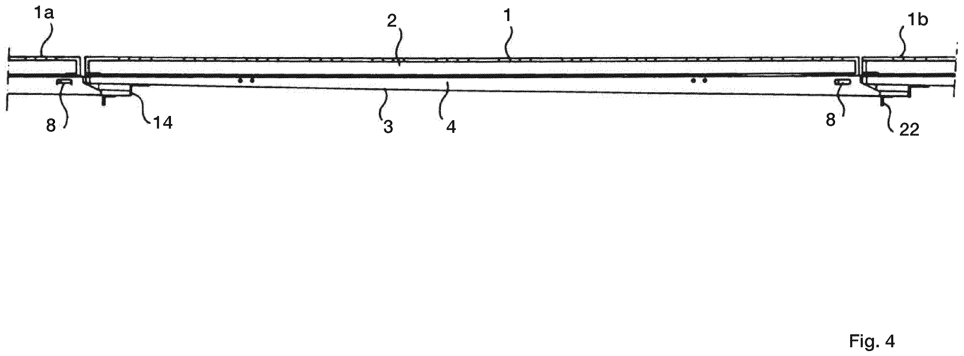

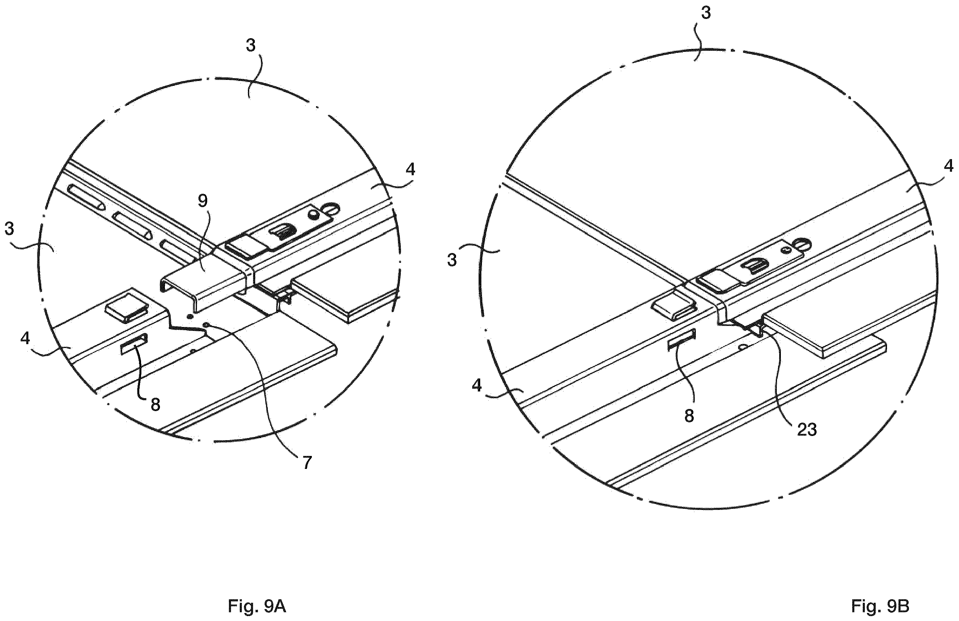

Figure 4 is a vertical longitudinal sectional view of a roof panel 1 with further roof panels 1a, 1b on the upper and lower sides, wherein the omega profiles 4 of the respective roof panels 1 and 1a and 1b, 1 are attached to each other. The realizing of this attachment is further shown in figure 9A and figure 9B. It can be seen in figure 4 that the coupled roof panels overlap each other in the manner of roof tiles, wherein the upright edge 14 "lifts" the plate element lying above. This difference in height is cancelled out for the solar panel 2 because the omega profile 4 narrows downward from the top.

Figure 9A shows two plate elements 3 and two omega profiles 4 of roof panels 1 for placing one above the other before attachment of the roof panels 1 has taken place using the omega profiles 4. For the purpose of the mutual attachment of the omega profiles 4 of the adjacent roof panels 1 the omega profile 4 of the roof panel 1 lying on the upper side is provided with a narrowed free outer end 9. The mutual attachment takes place by arranging the free outer end 9 of the omega profile 4 of a roof panel 1 in the omega profile 4 of the other roof panel 1 as shown in figure 9B. The free outer end 9 is guided in the omega profile 4 of the other roof panel 1 using guide strips 8. These guide strips 8 are formed by a part pressed out of the omega profile 4. The distance between the guide strip 8 and the inner wall 24 of the omega profile 4 substantially corresponds to the height of the free outer end 9.

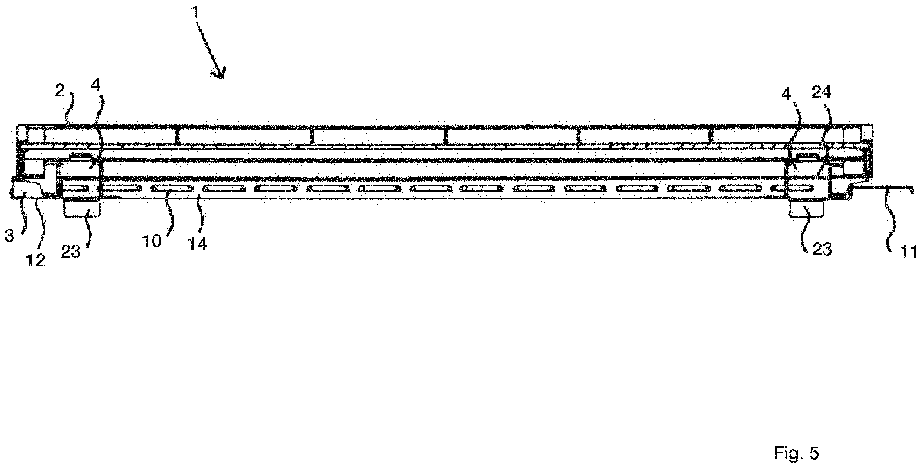

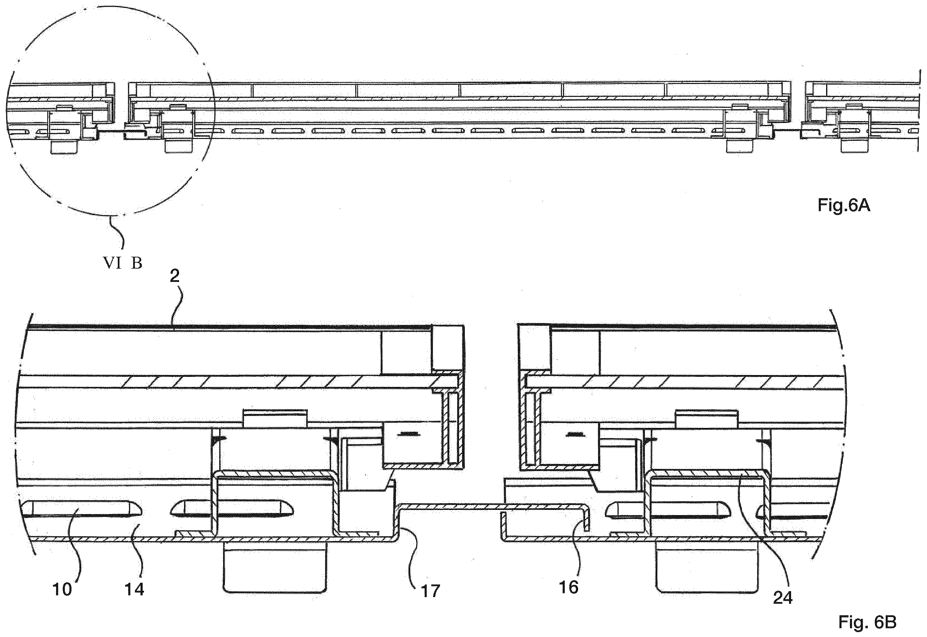

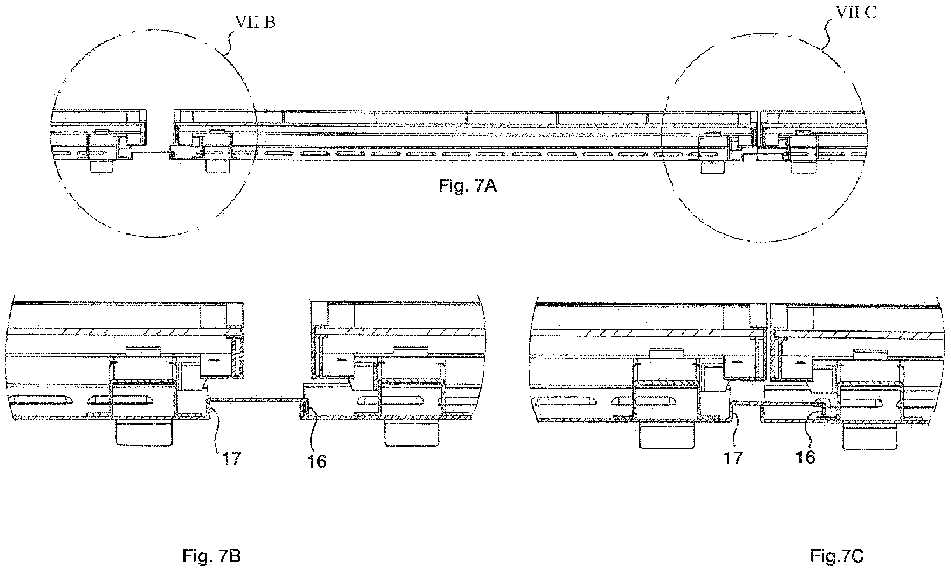

Figure 5 is a vertical cross-sectional view of the roof panel 1 with ventilation openings 10, also referred to as louvres, in the upright edge 14 for the purpose of ventilating the spaces between the solar panel 2 and the plate element 3 and between the plate element 3 and a roof construction situated thereunder. The space between the solar panel 2 and the plate element 3 as well as the space between the plate element 3 and the roof construction are ventilated in order to prevent condensation and to cool the solar panel 1 for the purpose of higher efficiency. Further shown in figure 5 are the first longitudinal profile 11 and the second longitudinal profile 12. These longitudinal profiles 11, 12 are formed in the shape of a U-profile so that they overlap each other as shown in figure 6B when roof panels are placed adjacently of each other. The first longitudinal profile 11 has an outlying leg 16 which takes a shorter form than the leg 17 adjacent to a plate portion. The degree of overlap of the longitudinal profiles 11 and 12 can thus be adjusted in continuously variable manner by sliding the outer leg of the first longitudinal profile 11 between the two legs of the U-shaped second longitudinal profile 12. The minimum overlap is shown in figure 7B. Figure 7C shows a relatively great overlap, whereby in this case the solar panels 2 are substantially in contact. The maximum overlap results when the leg 16 lies against the omega profile 4 of the adjacent roof panel 1 or when the solar panels 2 make contact with each other before the leg 16 touches the omega profile 4 due to the mutual distance of adjacent solar panels 2.

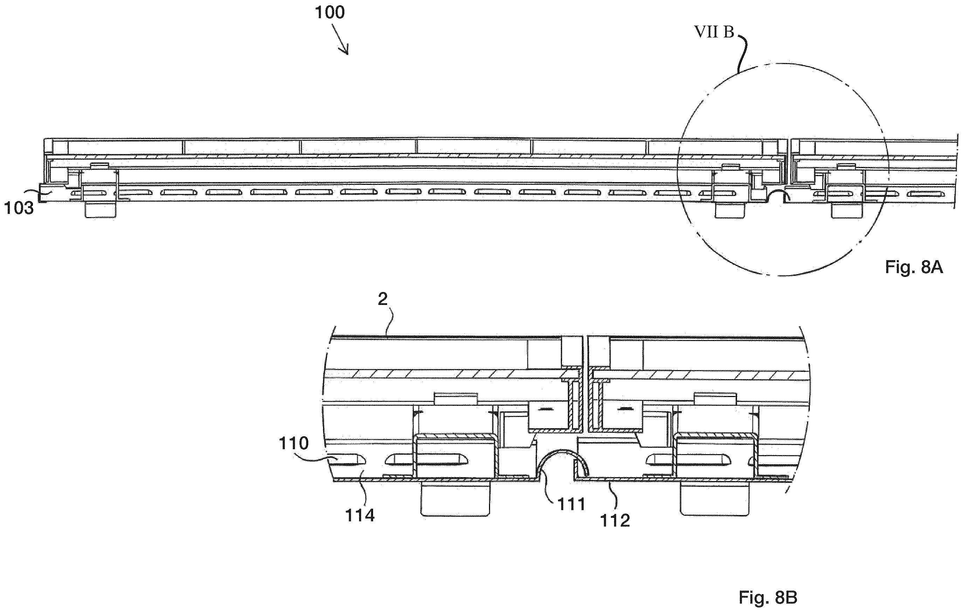

An alternative embodiment of a roof panel 100 shown in figures 8A and 8B has a first curved longitudinal profile 111. Other shapes of longitudinal profile can however also be envisaged. It is further possible to envisage at least one of the longitudinal profiles being embodied in assembled, optionally releasable parts. This can be in the form of a strip which is fixed to or can be snapped onto a side of a plate element. The width of the overlap could then be adjusted, for instance by making strips available in differing widths.

Figure 10 shows a roof 300 provided with roof panels 1, wherein the roof panels 1 are provided in a matrix and attached to tiling battens 20. The roof panels 1 cover the full width of the roof 300. For this purpose the width of the roof 300 for covering is first determined. The measured width is then divided by the width of the plate element 3. The integer value of the outcome of the above division is subsequently determined and the remainder value of the division then determined. An adjustment value is then calculated using the remainder value and the integer value. This adjustment value is then applied for the purpose of determining the overlap of the first longitudinal profile 11 and second longitudinal profile 12 of adjacent roof panels 1 by decreasing the maximum overlap of the two longitudinal profiles by the adjustment value. Finally, the roof panels 1 are arranged with the determined overlap on the roof 300. Because of the design of the roof panel according to the present invention a roof can be covered quickly.

The present invention has been elucidated in the figures and in the above description thereof on the basis of only a few embodiments. Many variations, which may or may not be obvious to the skilled person, can be envisaged within the scope of protection of the present invention which is defined in the following claims.

## Claims

1. A set of at least two roof panels (1, 1a, 1b, 100) which are mutually adjacent or which can at least be mounted mutually adjacently, each having an at least substantially rectangular peripheral form with a longitudinal direction and a transverse direction, each roof panel (1, 1a, 1b, 100) comprising a solar panel (2), a watertight plate element (3, 103) extending under and at a distance from the solar panel (2) and attaching means (4) with which the solar panel (2) and the plate element (3) are mutually attached or at least attachable, wherein a first plate element associated with at least a first roof panel is provided with a first longitudinal profile (11, 111) on a longitudinal side facing at least in mounted position toward a second roof panel and a second plate element associated with the second roof panel is provided with a second longitudinal profile (12, 112) on a longitudinal side facing at least in mounted position toward the first roof panel, and wherein an at least substantially watertight seal is realized when the first longitudinal profile (11, 111) and the second longitudinal profile (12, 112) are mounted overlapping each other, **characterized in that** the first and second plate elements (3, 103) are configured for the purpose of adjusting the degree of overlap of the two longitudinal profiles, such that the degree of overlap, at least in a width direction of the plate elements (3, 103), between a first longitudinal profile (11, 111) of said first plate element of said first roof panel and said second longitudinal profile (12, 112) of said second plate element of said second roof panel can be selected and adjusted up to a determined limit value.

2. A set of at least two roof panels (1, 1a, 1b, 100) according to claim 1, **characterized in that** the first and the second longitudinal profile, optionally mirrored along a longitudinal axis of the roof panel, are identical.

3. A set of at least two roof panels (1, 1a, 1b, 100) according to claim 2, **characterized in that** the first and the second longitudinal profile are each formed as a flat strip extending parallel to the plate portion of the plate element (3, 103), wherein each longitudinal profile (11, 12, 111, 112) comprises an upright wall adjacent to the plate portion.

4. A roof (300) provided with a set of roof panels (1a, 1b, 1c, 100) according to any of the claims 1 - 3.

5. A method for covering a roof at least partially with a set of roof panels (1a, 1b, 1c, 100) according to any of the claims 1 - 3, comprising the steps of:
- measuring the width to be covered with roof panels of the roof or roof part for covering;
- dividing the measured width by the plate width, i.e. the width of the plate portion of a roof panel;
- determining the integer value of the outcome of the division;
- determining the remainder value of the division;
- determining an adjustment value by dividing the remainder value by [the integer value minus 1];
- determining the overlap of the first and second longitudinal profile, being the maximum overlap minus the adjustment value; and
- arranging the roof panels on the roof or roof part for covering while taking account of the thus determined overlap.

## Patentansprüche

1. System von wenigstens zwei Dachpaneelen (1, 1a, 1b, 100), die aneinander angrenzen oder die wenigstens aneinander angrenzend montiert werden können, wobei jedes eine wenigstens im Wesentlichen rechteckige Umfangsform mit einer Längsrichtung und einer Querrichtung aufweist, wobei jedes Dachpaneel (1, 1a, 1b, 100) ein Solarpaneel (2), ein sich unter und in einem Abstand zu dem Solarpaneel (2) erstreckendes wasserdichtes Plattenelement (3, 103) und Befestigungsmittel (4), mit denen das Solarpaneel (2) und das Plattenelement (3) aneinander befestigt oder wenigstens befestigbar sind, aufweist, wobei ein zu wenigstens einem ersten Dachpaneel zugehöriges erstes Plattenelement an einer wenigstens in einer montierterten Position einem zweiten Dachpaneel zugewandten Längsseite mit einem ersten Längsprofil (11, 111) versehen ist und ein zu dem zweiten Dachpaneel zugehöriges zweites Plattenelement an einer wenigstens in einer montierten Position dem ersten Dachpaneel zugewandten Längsseite mit einem zweiten Längsprofil (12, 112) versehen ist und wobei eine wenigstens im Wesentlichen wasserdichte Abdichtung realisiert wird, wenn das erste Längsprofil (11, 111) und das zweite Längsprofil (12, 112) einander überlappend montiert werden, **dadurch gekennzeichnet, dass** das erste und zweite Plattenelement (3, 103) zum Zwecke des Einstellen des Grades an Überlappung der zwei Längsprofile konfiguriert sind, sodass der Grad an Überlappung, wenigstens in einer Breitenrichtung der Plattenelemente (3, 103), zwischen einem ersten Längsprofil (11, 111) des genannten ersten Plattenelements des genannten ersten Dachpaneels und des genannten zweiten Längsprofils (12, 112) des genannten zweiten Plattenelements des genannten zweiten Dachpaneels bis zu einem bestimmten Grenzwert ausgewählt und eingestellt werden kann.

2. System von wenigstens zwei Dachpaneelen (1, 1a, 1b, 100) nach Anspruch 1, **dadurch gekennzeichnet, dass** das erste und zweite Längsprofil, wahlweise gespiegelt entlang einer Längsachse des Dachpaneels, identisch sind.

3. System von wenigstens zwei Dachpaneelen (1, 1a, 1b, 100) nach Anspruch 2, **dadurch gekennzeichnet, dass** das erste und zweite Längsprofil jeweils als eine sich parallel zu dem Plattenbereich des Plattenelements (3, 103) erstreckende flache Leiste ausgebildet sind, wobei jedes Längsprofil (11, 12, 111, 112) eine an den Plattenbereich angrenzende aufrechte Wand umfasst.

4. Dach (300) versehen mit einem System von Dachpaneelen (1a, 1b, 1c, 100) nach einem der Ansprüche 1 bis 3.

5. Verfahren zum Bedecken eines Dachs wenigstens teilweise mit einem System von Dachpaneelen (1a, 1b, 1c, 100) nach einem der Ansprüche 1 bis 3, umfassend die folgenden Schritte:
- Messen der mit Dachpaneelen zu bedeckenden Breite des Dachs oder des Dachteils zum Bedecken;
- Dividieren der gemessenen Breite durch die Plattenbreite, d. h. die Breite des Plattenbereichs eines Dachpaneels;
- Bestimmen des ganzzahligen Werts des Ergebnisses der Division;
- Bestimmen des Restwerts der Division;
- Bestimmen eines Einstellwerts durch Dividieren des Restwerts durch [den ganzzahligen Wert minus 1];
- Bestimmen der Überlappung des ersten und zweiten Längsprofils, die der maximalen Überlappung minus dem Einstellwert entspricht; und
- Anordnen der Dachpaneele auf dem Dach oder Dachteil zum Bedecken unter Berücksichtigung der so bestimmten Überlappung.

## Revendications

1. Ensemble d'au moins deux panneaux de toiture (1, 1a, 1b, 100) qui sont mutuellement adjacents ou qui peuvent au moins être montés mutuellement adjacents, chacun ayant une forme périphérique au moins sensiblement rectangulaire avec une direction longitudinale et une direction transversale, chaque panneau de toiture (1, 1a, 1b, 100) comprenant un panneau solaire (2), un élément de plaque étanche à l'eau (3, 103) s'étendant sous le panneau solaire (2) et à distance de celui-ci et des moyens de fixation (4) avec lesquels le panneau solaire (2) et l'élément de plaque (3) sont mutuellement fixés ou peuvent être au moins fixés, où un premier élément de plaque associé à au moins un premier panneau de toiture est muni d'un premier profil longitudinal (11, 111) sur un côté longitudinal orienté au moins en position montée vers un deuxième panneau de toiture et un deuxième élément de plaque associé au deuxième panneau de toiture est muni d'un deuxième profil longitudinal (12, 112) sur un côté longitudinal orienté au moins en position montée vers le premier panneau de toiture, et où un joint au moins sensiblement étanche à l'eau est réalisé lorsque le premier profil longitudinal (11, 111) et le deuxième profil longitudinal (12, 112) sont montés en se chevauchant, **caractérisé en ce que** les premier et deuxième éléments de plaque (3, 103) sont configurés dans le but d'ajuster le degré de chevauchement des deux profils longitudinaux, de sorte que le degré de chevauchement, au moins dans une direction de la largeur des éléments de plaque (3, 103), entre un premier profil longitudinal (11, 111) dudit premier élément de plaque dudit premier panneau de toiture et ledit deuxième profil longitudinal (12, 112) dudit deuxième élément de plaque dudit deuxième panneau de toiture puisse être sélectionné et ajusté jusqu'à une valeur limite déterminée.

2. Ensemble d'au moins deux panneaux de toiture (1, 1a, 1b, 100) selon la revendication 1, **caractérisé en ce que** les premier et deuxième profils longitudinaux, éventuellement symétriques selon un axe longitudinal du panneau de toiture, sont identiques.

3. Ensemble d'au moins deux panneaux de toiture (1, 1a, 1b, 100) selon la revendication 2, **caractérisé en ce que** les premier et deuxième profils longitudinaux sont formés chacun comme une bande plate s'étendant parallèlement à la partie de plaque de l'élément de plaque (3, 103), où chaque profil longitudinal (11, 12, 111, 112) comprend une paroi verticale adjacente à la partie de plaque.

4. Toiture (300) muni d'un ensemble de panneaux de toiture (1a, 1b, 1c, 100) selon l'une des revendications 1 à 3.

5. Procédé pour couvrir une toiture au moins partiellement d'un ensemble de panneaux de toiture (1a, 1b, 1c, 100) selon l'une des revendications 1 à 3, comprenant les étapes consistant :
- à mesurer la largeur à couvrir des panneaux de la toiture ou d'une partie de toiture à couvrir ;
- à diviser la largeur mesurée par la largeur de plaque, c'est-à-dire la largeur de la partie de plaque d'un panneau de toiture ;
- à déterminer la valeur entière du résultat de la division ;
- à déterminer la valeur du reste de la division ;
- à déterminer une valeur d'ajustement en divisant la valeur du reste par [la valeur entière moins 1] ;
- à déterminer le chevauchement des premier et deuxième profils longitudinaux, qui est le chevauchement maximal moins la valeur d'ajustement ; et
- à agencer les panneaux de toiture sur la toiture ou une partie de toiture à couvrir en tenant compte du chevauchement ainsi déterminé.
